# EUROPÄISCHE PATENTSCHRIFT

(11) **EP 1 341 635 B1**
(45) Veröffentlichungstag und Bekanntmachung des Hinweises auf die Patenterteilung: **23.03.2005**
(21) Anmeldenummer: 01270401.1
(22) Anmeldetag: 05.12.2001
(51) Int. Cl.: B23K 9/10, B23K 9/095

(54) **SYSTEM ZUR DURCHFÜHRUNG EINES SCHWEI PROZESSES**
SYSTEM FOR CARRYING OUT A WELDING PROCESS
SYSTEME POUR L'EXECUTION D'UN PROCESSUS DE SOUDURE

(30) Priorität: 11.12.2000 AT 20502000
(43) Veröffentlichungstag der Anmeldung: 10.09.2003
(73) Patentinhaber: Fronius International GmbH, 4643 Pettenbach (AT)
(72) Erfinder: FEICHTINGER, Josef, A-4609 Thalheim bei Wels (AT); MAIR, Peter, A-4600 Wels (AT)
(74) Vertreter: Secklehner, Günter
(86) Internationale Anmeldenummer: PCT/AT2001/000382
(87) Internationale Veröffentlichungsnummer: WO 2002/047860

(56) Entgegenhaltungen:
- EP-A- 1 043 107
- WO-A-01/50404
- WO-A-99/36219
- WO-A-99/65652
- FR-A- 2 803 233
- US-A- 5 956 399
- PATENT ABSTRACTS OF JAPAN vol. 007, no. 211 (M-243), 17. September 1983 (1983-09-17) & JP 58 107272 A (MATSUSHITA DENKI SANGYO KK), 25. Juni 1983 (1983-06-25)

## Beschreibung

Die Erfindung betrifft ein Schweißsystem mit zumindest einer drahtlos kommunizierenden Komponente, wie dies im Anspruch 1 beschrieben ist, und ein Verfahren wie dies im Anspruch 21 beschrieben ist.

In der WO99/36219, die ein Schweißsystem bzw. Verfahren gemäß dem Oberbegriff des Anspruchs 1 bzw. 21 zeigt, ist eine Steuervorrichtung für ein Schweißgerät bzw.für eine Schweißanlage, bestehend aus einem über Verbindungsleitungen mit dem Schweißgerät verbundenen Schweißbrenner beschrieben. Dabei ist am Schweißbrenner zumindest eine Eingabevorrichtung und/oder eine Anzeigevorrichtung angeordnet. Die Steuervonichtung im Schweißgerät ist mit einem seriellen Datenbus, insbesondere einem Feldbus, verbunden, an dem der Schweißbrenner und/oder weitere Komponenten der Schweißanlage angeschlossen sind. Zwischen dem Schweißbrenner und der Steuervorrichtung des Schweißgerätes bzw. der Schweißanlage wird über den Datenbus ein serieller Datenaustausch durchgeführt, wobei im Schweißbrenner sämtliche für den Datenaustausch benötigten elektronischen Bauelemente angeordnet sind. Weiten wird darauf hingewiesen, dass es möglich ist, dass die Datenübertragung zumindest in Teilbereichen des Schweißgerätes mit den Komponenten des Schweißgerätes, insbesondere dem Schweißbrenner, oder externen Komponenten drahtlos, z.B. über Lichtsignale, wie Infrarotsignal, erfolgen kann, wobei für die drahtlose Datenübertragung wiederum ein standardisiertes bzw. einheitliches Datenprotokoll von den einzelnen Komponenten verwendet wird. Daraus ist jedoch in keiner Weise ersichtlich bzw. wird darin Beschrieben, wie eine drahtlose Datenübertragung aufgebaut werden soll, um die bestmögliche Übertragung zu erreichen.

Aus der DE 297 15 731 U1 ist ein Schweißgerät, Schneidgerät oder dgl. mit einem Gehäuse und darin angeordneter elektrotechnischer Ausrüstung und mit einer Bedienfläche am Gehäuse bekannt. Dabei ist die Bedienfläche an einem gesonderten Bedienteil angeordnet und das Bedienteil vom Gehäuse abnehmbar, jedoch mit der elektrotechnischen Ausrüstung im Gehäuse über ein Verbindungskabel oder drahtlos steuerungstecbnisch verbunden.

Aufgabe der Erfindung ist es nunmehr, ein Schweißsystem bzw. ein Verfahren zur Durchführung eines Schweiß- oder artverwandten Prozesses zu schaffen, bei welchem die Flexibilität der Anlage und/oder der Komponenten erhöht wird. Weiters ist es Aufgabe der Erfindung, eine sehr gute Signal- und/oder Datenübertragung zwischen Komponenten des Systems bzw. der Anlage zu ermöglichen.

Die Aufgabe der Erfindung wird durch die Merkmale im Kennzeichenteil des Anspruches 1 gelöst. Vorteilhaft ist hierbei, daß das bzw. die Kommunikationsmodule an verschiedenen Komponenten angeordnet sein können und sich dadurch kurze Datenübertragungsstrecken für eine Signal- und/oder Datenübertragung ergeben, wodurch die Übertragungsqualität gesteigert werden kann.

Durch eine Weiterbildung gemäß Anspruch 2 wird die Flexibilität der Anlage erhöht.

Vorteilhaft ist auch eine Weiterbildung gemäß Anspruch 3. Der Vorteil, der sich daraus ergibt, liegt darin, daß Daten aus einem leitungsgebundenen Datenübertragungssystem in ein leitungsungebundenes Datenübertragungssystem übertragen werden.

Durch eine vorteilhafte Weiterbildung gemäß Anspruch 4 wird erreicht, daß ein Bestücken bzw. ein Austausch der Kommunikationsmodule durch einen Benutzer sehr einfach durchzuführen ist.

Eine vorteilhafte Ausgestaltung der Aufnahmevorrichtung ist im Anspruch 5 beschrieben, wodurch ein unbeabsichtigtes Herausfallen bzw. Entfernen des Kommunikationsmodules vermieden wird.

Vorteilhaft ist auch eine Ausgestaltung nach Anspruch 6. Der Vorteil dabei ist eine sehr störungs- bzw. schmutzunempfindliche Verbindung der Teilstücke der Verbindungsvorrichtung.

Bei einer Ausgestaltung gemäß Anspruch 7 wird der Vorteil erzielt, daß nach Einsetzen des Kommunikationsmodules durch einen Benutzer keine zusätzlichen Maßnahmen gesetzt werden müssen, um eine Verbindung der Teilstücke der Verbindungsvorrichtung zu erreichen.

Ausgestaltungsvarianten gemäß den Ansprüchen 8 und 9 beschreiben vorteilhafte Ausführungen der Verbindungsvorrichtung.

Durch den Anspruch 10 wird der Vorteil erzielt, daß ein aus dem Stand der Technik bekanntes, weitverbreitetes und sehr störungsunempfindliches Datenübertragungssystem herangezogen wird.

Durch Weiterbildungen gemäß den Ansprüchen 11 bis 13 wird der Vorteil erzielt, daß der Betrieb des Kommunikationssystems genehmigungsfrei ablaufen kann und somit für einen Benutzer nicht auf die Einhaltung gesetzlicher Auflagen geachtet werden muß.

Vorteilhaft an einer Ausbildungsvariante gemäß Anspruch 14 ist, daß zum Signal- und/oder Datenaustausch zu anderen Komponenten ein vielerorts verfügbares Netz herangezogen wird.

Durch die Ausgestaltung gemäß Anspruch 15 ergibt sich der Vorteil, daß eine Verbindung zu einem überregionalen Datennetz, insbesondere einem globalen Datennetz, aufgebaut wird und dadurch ein überregionaler bzw. globaler Datenaustausch durchgeführt werden kann.

Eine vorteilhafte Energieversorgung der Kommunikationsmodule ist durch den Anspruch 16 beschrieben.

Mit einem Energiespeicher des Kommunikationsmodules gemäß Anspruch 17 wird der Vorteil erzielt, daß das Kommunikationsmodul ortsunabhängig einsetzbar ist.

Durch eine Weiterbildung gemäß Anspruch 18 wird der Vorteil erzielt, daß unterschiedliche Arten der Datenübermittlung zwischen dem drahtgebundenen Datenübertragungssystem und dem drahtlosen Datenübertragungssystem aufeinander abgestimmt werden können.

Eine vorteilhafte Anordnung der Umwandlungsvorrichtung wird im Anspruch 19 beschrieben.

Durch eine Weiterbildung gemäß Anspruch 20 wird der Vorteil erzielt, daß zu übertragende Daten nicht sofort gesendet werden müssen, sondern für eine weitere Bearbeitung zwischengespeichert werden können oder zu einem späteren Zeitpunkt übermittelbar sind.

Unabhängig davon wird die Aufgabe der Erfindung auch durch die Maßnahmen im Kennzeichenteil des Anspruches 21 gelöst. Vorteilhaft ist hierbei, daß ein sicherer Datentransfer ohne großen Aufwand durchgeführt werden kann, da das bzw. die Kommunikationsmodule an verschiedenen Komponenten angeordnet sein kann bzw. können und dadurch eine sehr kurze Datenübertragungsstrecke für eine Signal- und/oder Datenübertragung geschaffen werden kann bzw. ein Daten- bzw. Kommunikationsnetz in Abhängigkeit von örtlichen Gegebenheiten aufgebaut werden kann.

Durch eine vorteilhafte Maßnahme gemäß Anspruch 22 wird der Vorteil erzielt, daß auch Daten zu einem entfernten bzw. baulich getrennten System bzw. einer baulich getrennten Komponente übertragen werden können.

Durch Maßnahmen gemäß den Ansprüchen 23-25 wird der Vorteil erzielt, daß ein Betrieb des Kommunikationsnetzes im Rahmen der gesetzlichen Bestimmungen bzw. Verordnungen für derartige Sendeanlagen gewährleistet ist.

Eine vorteilhafte Maßnahme zur Einbindung eines weitverbreiteten Kommunikationsnetzes ist im Anspruch 26 beschrieben.

Durch die Maßnahmen gemäß Anspruch 27 wird der Vorteil erzielt, daß die Signal- bzw. Datenübertragung sehr flexibel aufgebaut werden kann und sich dadurch die Reichweite, über welche die einzelnen Sendevorrichtungen bzw. Sendeeinheiten übertragen müssen, verringert.

Eine besonders störungs- und schmutzunanfällige Verbindungsmethode kennzeichnet der Anspruch 28.

Durch die Maßnahme gemäß Anspruch 29 wird der Vorteil erzielt, daß unterschiedliche Möglichkeiten der Datenweiterleitung, beispielsweise ein unterschiedlicher Aufbau der Datenblöcke, aufeinander anpaßbar bzw. aufeinander abgestimmt sind bzw. werden können.

Durch die Maßnahme gemäß Anspruch 30 wird eine besonders hohe Flexibilität des Kommunikationsmodules erreicht.

Die vorteilhafte Maßnahme gemäß Anspruch 31 ermöglicht einen besonders flexiblen bzw. schweißgeräteunabhängigen Aufbau des Kommunikationssystems.

Durch die Maßnahme gemäß Anspruch 32 wird der Vorteil erzielt, daß eine weitere Steuerund/oder Datenleitung zu jener Komponente, welche die Daten empfängt, nicht nötig ist.

Durch die vorteilhafte Maßnahme gemäß Anspruch 33 wird erzielt, daß eine Signal- und/oder Datenübertragung zwischen den Komponenten über Teilstrecken drahtgebunden sowie über Teilstrecken drahtlos erfolgt, wodurch sich ein sehr einfacher und flexibler bzw. an die örtlichen Gegebenheiten des Einsatzortes anpaßbarer Aufbau des Kommunikationssystems realisieren läßt.

Die Erfindung wird anschließend durch Ausführungsbeispiele näher beschrieben.

Es zeigen:
- Fig. 1: eine schematische Darstellung eines Schweißgerätes bzw. einer Schweißmaschine;
- Fig. 2: ein Ausführungsbeispiel des Kommunikationsmodules in einer Komponente eines Schweißgerätes;
- Fig. 3: ein Schaubild eines modularen Kommunikationssystems zwischen unterschiedlichen Komponenten eines Schweißgerätes;
- Fig. 4: ein Schaubild eines modularen Kommunikationssystems zwischen unterschiedlichen Komponenten zweier Schweißgeräte.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

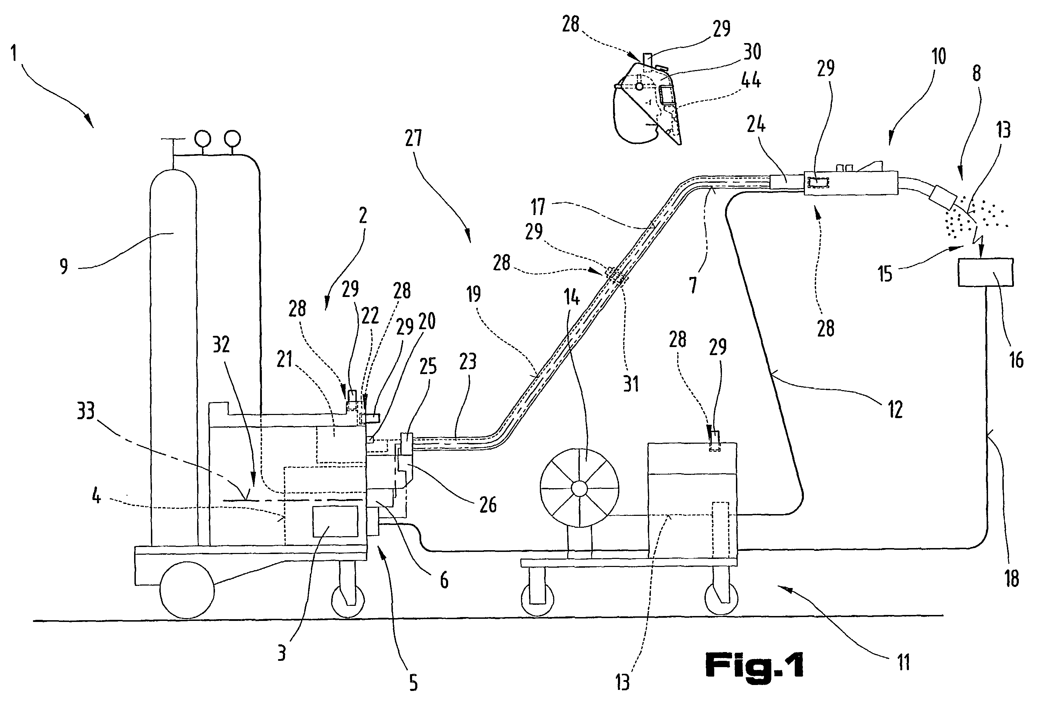

In Fig. 1 ist ein System zur Durchführung eines Schweißprozesses gezeigt. Dabei ist eine Schweißanlage bzw. ein Schweißgerät 1 für verschiedenste Schweißverfahren, wie z.B. MIG/MAG-Schweißen bzw. WIG/TIG-Schweißen oder Elektroden-Schweißverfahren usw., dargestellt. Selbstverständlich ist es möglich, daß die erfindungsgemäße Lösung bei einer Stromquelle bzw. einer Schweißstromquelle eingesetzt werden kann.

Das Schweißgerät 1 umfaßt eine Schweißstromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dgl., zwischen einem Gasspeicher 9 und einem Schweißbrenner 10 angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Schweißdraht 13 von einer Vorratstrommel 14 in den Bereich des Schweißbrenners 10 zugeführt wird. Selbstverständlich ist es möglich, daß das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist.

Der Strom zum Aufbauen eines Lichtbogens 15 zwischen dem Schweißdraht 13 und einem Werkstück 16 wird über eine Versorgungsleitung 17 vom Leistungsteil 3 der Schweißstromquelle 2 dem Schweißbrenner 10 bzw. dem Schweißdraht 13 zugeführt, wobei das zu verschweißende Werkstück 16 über eine weitere Versorgungsleitung 18 ebenfalls mit dem Schweißgerät 1, insbesondere mit der Schweißstromquelle 2, verbunden ist und somit über den Lichtbogen 15 ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und somit eine Kühlung des Schweißbrenners 10 bzw. des Schweißdrahtes 13 bewirkt werden kann.

Das Schweißgerät 1 weist weiters eine Ein- und/oder Ausgabevorrichtung 22 auf, über die die unterschiedlichsten Schweißparameter bzw. Betriebsarten des Schweißgerätes 1 eingestellt werden können. Dabei werden die über die Ein- und/oder Ausgabevorrichtung 22 eingestellten Schweißparameter an die Steuervorrichtung 4 weitergeleitet, und von dieser werden anschließend die einzelnen Komponenten der Schweißanlage bzw. des Schweißgerätes 1 angesteuert.

Weiters ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine zum Stand der Technik zählende Verbindungsvorrichtung 24 mit dem Schweißbrenner 10 verbunden, wogegen die einzelnen Leitungen im Schlauchpaket 23 mit den einzelnen Kontakten des Schweißgerätes 1 über Anschlußbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden.

Zum Aufbau eines modularen Kommunikationssystems 27 sind nun in den unterschiedlichen Komponenten des Schweißgerätes 1 Aufnahmevorrichtungen 28 zur Aufnahme von Kommunikationsmodulen 29 vorgesehen. Diese unterschiedlichen Komponenten des Systems bzw. der Schweißanlage bzw. des Schweißgerätes 1 können beispielsweise der Schweißbrenner 10 und/oder das Schlauchpaket 23 und/oder die Steuervorrichtung 4 und/oder die Stromquelle 2 und/oder das Drahtvorschubgerät 11 und/oder ein Schweißschirm 30 und/oder die Ein- und/oder Ausgabevorrichtung 22 und/oder dgl. sein.

Selbstverständlich ist es möglich, weitere Aufnahmevorrichtungen 28 für Kommunikationsmodule 29 an beliebigen Stellen des Schweißgerätes 1 bzw. an beliebigen Komponenten desselben anzuordnen. Stellvertretend für die Vielzahl dieser Ausgestaltungsvarianten sei nur die Möglichkeit erwähnt, das Schlauchpaket 23 durch mehrere Teilstücke aufzubauen, welche über eine Kupplungsvorrichtung 31 verbunden sind und diese Kupplungsvorrichtung 31 ebenfalls mit einer Aufnahmevorrichtung 28 zur bedarfsweisen Aufnahme des Kommunikationsmodules 29 auszustatten, wie dies in strichlierten Linien dargestellt ist.

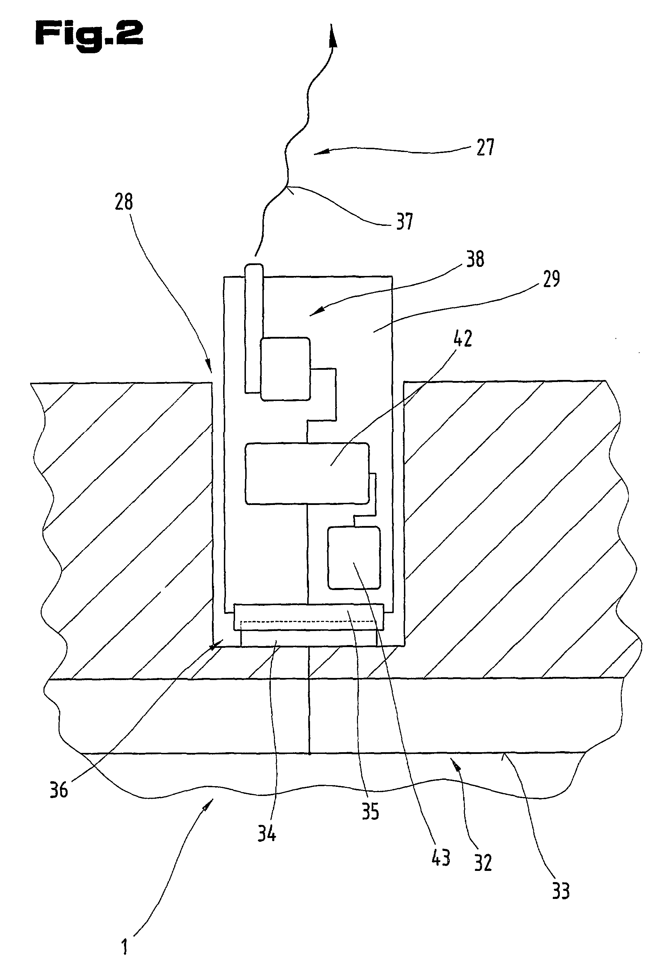

In der Fig. 2 ist eine mögliche Ausführungsvariante des Kommunikationsmodules 29, welches in einer Aufnahmevorrichtung 28 einer Komponente des Schweißgerätes 1 gehaltert ist, gezeigt. Zur Signal- und/oder Datenübertragung zwischen dem Kommunikationsmodul 29 und einem internen Datenübertragungssystem 32, insbesondere einem Bussystem, wie beispielsweise einem Feldbus 33, weist die Komponente des Schweißgerätes 1 und das Kommunikationsmodul 29 jeweils zumindest ein korrespondierendes Teilstück 34, 35 einer Verbindungsvorrichtung 36 auf.

Die Aufnahmevorrichtung 28 kann zum Einschieben bzw. Einstecken des Kommunikationsmodules 29 ausgebildet sein und mit Mittel gegen ein unbeabsichtigtes Entfernen bzw. Herausfallen des Kommunikationsmodules 29 ausgerüstet sein. Diese Mittel können beispielsweise Haltekrallen oder Rastverbindungen sein. Weiters ist es möglich, daß die Aufnahmevorrichtung 28 Führungsschienen oder eine beliebige Leit- bzw. Plazierungseinrichtung zum positionsgenauen Einsetzen des Kommunikationsmodules 29 aufweist. Wichtig ist, daß das Kommunikationsmodul 29 ohne großen Aufwand in die Aufnahmevorrichtung 28 eingebracht werden kann, d.h. also, daß dazu nur ein geringer zeitlicher Aufwand nötig ist und der Einbau bzw. das Austauschen ohne großen Aufwand an Hilfsmitteln, insbesondere werkzeuglos, durchgeführt werden kann.

Zusätzlich zur Signal- und/oder Datenübertragung kann diese Verbindungsvorrichtung 36 selbstverständlich auch zur Energieversorgung des Kommunikationsmodules 29 durch eine in der Komponente des Schweißgerätes 1 angeordnete Energiequelle, insbesondere eine Gleichspannungsquelle, herangezogen werden.

Die Verbindungsvorrichtung 36 kann durch eine serielle oder parallele Schnittstelle, insbesondere eine RS232-Schnittstelle, wie diese aus dem Stand der Technik bekannt ist, gebildet sein. Die Verbindungsvorrichtung 36 ist vorteilhafterweise derart ausgebildet, daß diese beim Einsetzen des Kommunikationsmodules 29 in die Aufnahmevorrichtung 28 automatisch eine Verbindung zwischen dem Kommunikationsmodul 29 und der jeweiligen Komponente des Systems bzw. der Schweißanlage bzw. des Schweißgerätes 1 herstellt. Die Verbindung selbst kann dabei elektrisch oder optisch, beispielsweise mittels Infrarotstrahlung, hergestellt werden.

Es ist aber auch möglich, die Verbindungsvorrichtung 36 durch eine Infrarotschnittstelle zur Signal- und/oder Datenübertragung und eine Induktionsschleife zur Energieversorgung des Kommunikationsmodules 29 auszugestalten. Dabei weisen die Aufnahmevorrichtung 28 der Komponente des Schweißgerätes 1 und das Kommunikationsmodul 29, insbesondere die Teilstücke 34 und 35, entsprechende Sende- und/oder Empfangsvorrichtungen auf, welche der Übersichtlichkeit halber nicht dargestellt sind.

Zum Aufbau bzw. zur Kommunikation mit einem drahtlosen Daten- bzw. Kommunikationsnetz 37 weist das Kommunikationsmodul 29 eine Sende- und/oder Empfangsvorrichtung 38 auf. Diese Sende- und/oder Empfangsvorrichtung 38 ist zum Senden und/oder Empfangen von Signalen, insbesondere Funksignalen, ausgebildet.

Wichtig ist, daß die Sendeleistung der Sende- und/oder Empfangsvorrichtung 38 unterhalb einer genehmigungspflichtigen Sendeleistung gewählt wird, um eine kostengünstige Herstellung der Sende- und/oder Empfangsvorrichtungen 38 sicherzustellen, und vor allem, um nicht eine Genehmigung zum Betrieb dieser Sende- und/oder Empfangsvorrichtung 38, insbesondere eine Postgenehmigung, zu benötigen.

Die Sende- und/oder Empfangsvorrichtung 38 kann dabei für eine Reichweite von maximal 100 m im Umkreis, bevorzugt zwischen 23 m, ausgebildet sein.

Die Sende- und/oder Empfangsvorrichtung 38 ist weiters zum Senden und/oder Empfangen von genehmigungsfreien Frequenzen bzw. von Frequenzen, welche für derartige Verwendungszwecke vorgesehen bzw. freigegeben sind, ausgebildet. Da in verschiedenen Staaten unterschiedliche Sendeleistungen bzw. Frequenzen zulässig sind bzw. für derartige Zwecke freigegeben sind und sich derartige Bestimmungen auch laufend ändern, können auch die Sende- und/oder Empfangsvorrichtungen 38 in unterschiedlichen Staaten unterschiedlich ausgebildet sein.

Es ist auch möglich, das Kommunikationsmodul 29, insbesondere die Sende- und/oder Empfangsvorrichtung 38, zur Abgabe von Signalen mit verschiedenen Leistungen bzw. unterschiedlichen Frequenzen aufzubauen und eine Auswahl der tatsächlich verwendeten Sendeleistung bzw. Frequenz durch Mikroschalter oder mit Hilfe von "Jumpern" festzulegen. So ist es durch einfache Umschaltung der Mikroschalter bzw. durch einfaches Stecken der Jumper möglich, die Sende- und/oder Empfangsvorrichtung 38 auf die jeweils für einen derartigen Zweck freigegebenen Leistungen bzw. Frequenzen anzupassen. Eine derartige Anpassung wird vorzugsweise werksseitig in Abhängigkeit des zu beliefernden Staates getroffen.

Um eine Signal- und/oder Datenübertragung über eine die Reichweite einer Sende- und/oder Empfangsvorrichtung 38 übersteigenden Strecke zu ermöglichen, werden mehrere Kommunikationsmodule 29 mit Sende- und/oder Empfangsvorrichtungen 38 verwendet, wobei beispielsweise die erste Sende- und/oder Empfangsvorrichtung 38 als Sender fungiert, die zweite Sende- und/oder Empfangsvorrichtung 38 den Empfänger darstellt und dazwischen eine beliebige Anzahl von Sende- und/oder Empfangsvorrichtungen 38 angeordnet sein können, welche lediglich zur Kommunikationsweiterleitung, also zum Empfangen, Verstärken und Weitersenden der Signale und/oder Daten dienen.

Des weiteren kann das Kommunikationsmodul 29 eine Vorrichtung 42 umfassen, welche zur Anpassung unterschiedlicher Datenformate zwischen dem Datenübertragungssystem 32 und dem drahtlosen Daten- bzw. Kommunikationsnetz 37 dient. Die Vorrichtung 42 kann dazu über ein und/oder mehrpolige Verbindungsleitungen mit dem Teilstück 35 der Verbindungsvorrichtung 36 und der Sende- und/oder Empfangsvorrichtung 38 in Verbindung stehen.

Des weiteren ist es möglich, daß das Kommunikationsmodul 29 eine Speichereinheit 43 umfaßt, welche beispielsweise zur Zwischenspeicherung von zu übertragenden Daten genutzt werden kann und mit der Vorrichtung 42 in Leitungsverbindung stehen kann.

Es ist auch möglich, einzelne Kommunikationsmodule 29 als Benutzern zuordenbare Kommunikationsmodule 29 auszubilden. D.h., daß in der Speichereinrichtung 43 dieser einem Benutzer zuordenbaren Kommunikationsmodule 29 benutzerspezifische Daten abgespeichert werden können und diese vom Benutzer abrufbar bereitgestellt werden. In diesem Zusammenhang sei beispielsweise die Möglichkeit erwähnt, daß ein Benutzer eines Schweißgerätes 1 das ihm zugeordnete Kommunikationsmodul 29, welches seine benutzerspezifischen Daten, beispielsweise Schweißeinstellungen, enthält, in einen Schweißbrenner 10 des Schweißgerätes 1 einbringt und daraufhin dieses benutzerspezifische Kommunikationsmodul 29 mit dem drahtlosen Daten- bzw. Kommunikationsnetz 37 in Verbindung tritt und Daten zu weiteren Komponenten des Schweißgerätes 1 weiterleitet bzw. von diesen empfängt, wobei der Benutzer auf die in der Speichereinheit 43 abgelegten benutzerspezifischen Daten zurückgreifen kann bzw. das Schweißgerät 1 gemäß dieser Daten eingestellt wird.

### Funktionsprinzip:

Wie nun am besten durch eine Zusammenschau der Fig. 1 und 2 zu ersehen ist, kann ein Schweißgerät 1 an einer Vielzahl von Komponenten bzw. an beliebigen Stellen Aufnahmevorrichtungen 28 für Kommunikationsmodule 29 aufweisen.

Zumindest eine Teilmenge der Aufnahmevorrichtungen 28 weist Teilstücke 34 von Verbindungsvorrichtungen 36 auf. Die Verbindungsvorrichtung 36 kann zur Signal- und/oder Datenübertragung von einem in zumindest einer Komponente des Schweißgerätes 1 angeordneten internen Datenübertragungssystem 32, insbesondere einen Feldbus 33, zum Kommunikationsmodul 29 und/oder zu dessen Energieversorgung herangezogen werden. Es ist aber ebenfalls möglich, Komponenten des Schweißgerätes 1 lediglich mit einer Aufnahmevorrichtung 28 ohne die Verbindungsvorrichtung 36 auszustatten, wobei diese Aufnahmevorrichtungen 28 lediglich zur Halterung eines Kommunikationsmodules 29 dienen, wobei durch dieses Kommunikationsmodul 29 keine direkte Verbindung zum Datenübertragungssystem 32, insbesondere dem Feldbus 33 der Komponente, besteht und auch das Kommunikationsmodul 29 selbst zur Energieversorgung einen internen Energiespeicher, beispielsweise eine Batterie oder einen Akkumulator, umfassen kann. Diese Kommunikationsmodule 29 dienen nur zur Verkürzung der Strecke, über welche ein Kommunikationsmodul 29 Signale und/oder Daten übertragen können muß. Ein vergleichbares Empfangen, Verstärken und Weitersenden von Signalen und/oder Daten ist aus dem Stand der Technik, beispielsweise durch Relaisstationen für Funkanlagen oder Mobiltelefonnetze, bekannt.

Die Anordnung bzw. die Bestückung verschiedener Komponenten mit Kommunikationsmodulen 29 kann je nach den örtlichen Gegebenheiten, in welchen das System bzw. das Schweißgerät aufgebaut ist, unterschiedlich gewählt werden. Dabei muß lediglich darauf geachtet werden, daß ein Signal- und/oder Datenaustausch zwischen unterschiedlichen Komponenten durch eine genügend hohe Anzahl von Kommunikationsmodulen 29 mit Sende- und/oder Empfangsvorrichtungen 38 sichergestellt ist und die Reichweite einer Sende- und/oder Empfangsvorrichtung 38 nicht überschritten wird.

Das modulare Kommunikationssystem 27 dient zur bidirektionalen Weiterleitung bzw. Übermittlung von Daten und/oder Signalen zwischen dem internen Datenübertragungssystem 32, welches im Schweißgerät 1 bzw. in der Schweißanlage angeordnet ist und beispielsweise durch ein Bussystem realisiert ist, und dem drahtlosen Daten- bzw. Kommunikationsnetz 37. Dabei wird über das drahtlose Daten- bzw. Kommunikationsnetz 37 wieder eine bidirektionale Weiterleitung von Daten zu einer weiteren Komponente durchgeführt und von dieser weiterverarbeitet bzw. angezeigt bzw. ausgegeben. Es ist aber ebenfalls möglich, diese Komponente durch die übermittelten Daten zu regeln bzw. zu steuern. Üblicherweise ist in einem System bzw. in einer Schweißanlage oder einem Schweißgerät 1 nur ein Bussystem bzw. nur ein internes Datenübertragungssystem 32 vorhanden. Es ist aber ebenfalls möglich, in unterschiedlichen Komponenten unterschiedliche Datenübertragungssysteme 32, insbesondere Bussysteme, anzuordnen und diese über das drahtlose Daten- bzw. Kommunikationsnetz 37 zu verbinden. Wichtig ist dabei nur, daß eine Datenübertragung von einem leitungsgebundenen Datenübertragungssystem 32 zu einem leitungsungebundenen bzw. drahtlosen Daten- bzw. Kommunikationsnetz 37 oder umgekehrt stattfindet.

Will nun ein Benutzer ein modulares Kommunikationssystem 27 zwischen unterschiedlichen Komponenten des Schweißgerätes 1 aufbauen, so stattet er diese Komponenten mit jeweils einem Kommunikationsmodul 29 aus, welche miteinander einen Datenaustausch vornehmen können.

Ein solcher Datenaustausch kann beispielsweise zwischen der Steuervorrichtung 4 und dem Schweißschirm 30, welcher über eine Anzeigevorrichtung 44 an seiner Innenseite oder über eine beliebige andere Ein- und/oder Ausgabevorrichtung verfügen kann, durchgeführt werden.

Ein weiterer Signal- und/oder Datenaustausch kann beispielsweise zwischen der Steuervorrichtung 4 und dem Drahtvorschubgerät 11 und/oder zwischen der Steuervorrichtung 4 und der Ein- und/oder Ausgabevorrichtung 22 durchgeführt werden.

Um nun größere Distanzen zwischen den einzelnen Komponenten des Schweißgerätes 1 überbrücken zu können, ist es nun möglich, daß zwischen den beiden Kommunikationsmodulen 29, welche miteinander in Verbindung treten sollen, ein oder mehrere weitere Kommunikationsmodule 29 angeordnet sind, welche die zu übermittelnden Signale und/oder Daten empfangen, verstärken und weitersenden.

Für einen Signal- und/oder Datenaustausch zwischen der Steuervorrichtung 4 und dem Schweißschirm 30 ist es beispielsweise möglich, daß neben der Steuervorrichtung 4 und dem Schweißschirm 30 auch die Kupplungsvorrichtung 31 und der Schweißbrenner 10 mit einem Kommunikationsmodul 29 ausgestattet ist. Bei einem monodirektionalen Datenfluß wirkt in diesem Fall das Kommunikationsmodul 29 der Steuervorrichtung 4 als "Sender", das Kommunikationsmodul der Kupplungsvorrichtung 31 und des Schweißbrenners 10 werden lediglich zur Weiterleitung benützt und das Kommunikationsmodul 29 des Schweißschirms 30 wirkt als "Empfänger".

Da es möglich ist, daß ein Kommunikationsmodul 29 im Empfangsbereich von mehreren anderen Kommunikationsmodulen 29 von anderen Komponenten des Schweißgerätes 1 steht, ist es möglich, daß es zu einer parallelen Abarbeitung von Aufträgen kommt. Um dies zu erkennen, ist es zweckmäßig, vor jeder Übertragung von Daten vor diese Übertragung eine laufende Auftragsnummer zu vergeben.

Ein zu übermittelnder Signal- und/oder Datenblock kann beispielsweise aus einer Kennung des Kommunikationsmodules 29 und einer laufenden Auftragsnummer und anschließend den zu übermittelnden Signalen und/oder Daten bestehen. Wird nun dieser Datenblock von einem weiteren Kommunikationsmodul 29 empfangen, so kann dieses feststellen, von welchem Kommunikationsmodul 29 die gesendeten Daten stammen und welche fortlaufende Auftragsnummer dieser Sendung zugeordnet ist. Die fortlaufende Auftragsnummer kann beispielsweise von 000 bis 999 mit einer sich ständig wiederholenden Endlosschleife vergeben werden.

Empfängt nun ein Kommunikationsmodul 29 mehrmals eine Sendung mit derselben fortlaufenden Auftragsnummer, so weiß diese, daß sie diese Sendung bereits von einem anderen Kommunikationsmodul 29 empfangen hat und kann diese Sendung ignorieren, da sie bereits zu einem früheren Zeitpunkt abgearbeitet worden ist.

Selbstverständlich muß sichergestellt werden, daß bis zur nächsten Vergabe der gleichen fortlaufenden Auftragsnummer genügend Zeit verstreicht, um die Vergabe derselben Auftragsnummer für einen späteren und unterschiedlichen Auftrag in zu kurzer Zeit zu vermeiden. Dazu kann es nötig sein, die laufende Auftragsnummer beispielsweise vier- oder sechsstellig auszubilden.

Weiters ist es möglich, daß die Datenblöcke auch Prioritätsbits umfassen. Dadurch wird sichergestellt, daß bei einem gleichzeitigen Eintreffen von mehreren Datenblöcken an der Sende- und/oder Empfangs Vorrichtung 38 des Kommunikationsmodules 29 die Abarbeitung der eingelangten Aufträge nach Ihrer Wichtigkeit durchgeführt wird.

Ein Senden dieser Datenblöcke kann zeitlich synchronisiert oder vorteilhafterweise zeitlich unsynchronisiert durchgeführt werden. Bei einem zeitlich nicht synchronisierten Senden der Datenblöcke spricht man von einem "ALOHA-Prinzip", welches sich besonders für ein System mit geringen Datenraten und vielen Sendern eignet.

Durch das "ALOHA-Prinzip" kann jede Sende- und/oder Empfangsvorrichtung 38 beim Senden zufällig, also direkt und ohne Freigabesignal auf das drahtlose Daten- bzw. Kommunikationsnetz 37, insbesondere auf einen Funkkanal dieses Daten- bzw. Kommunikationsnetzes 37, zugreifen, wodurch die Sende- und/oder Empfangsvorrichtungen 38 keinen Aufwand für eine Koordination des Zugriffes betreiben müssen, wodurch der Aufbau der Konununikationsmodule 29 kleiner und kostengünstiger realisiert werden kann.

Um mehrere Kanäle übertragen zu können, ist es auch möglich, Datenblöcke zeit- oder frequenzmultiplex über das Daten- bzw. Kommunikationsnetz 37 zu versenden.

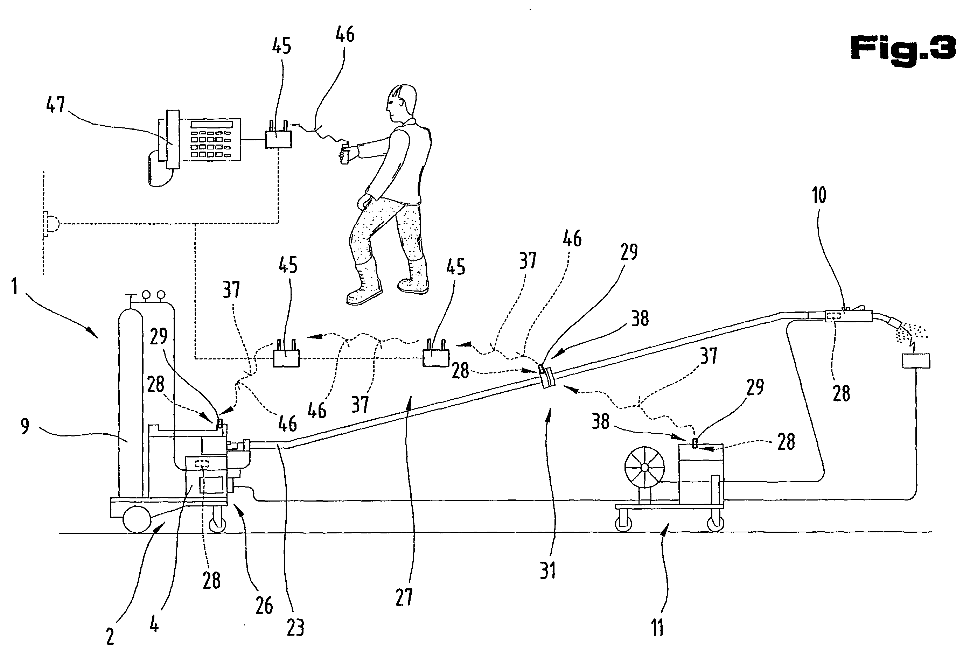

In der Fig. 3 ist ein Schweißgerät 1 mit einem externen Drahtvorschubgerät 11 gezeigt, wobei das Drahtvorschubgerät 11 und der Schweißbrenner 10 des Schweißgerätes 1 in größerer Distanz zu den weiteren Komponenten des Schweißgerätes 1, wie beispielsweise der Steuervorrichtung 4 und der Stromquelle 2, angeordnet sind. Um nun ein modulares Kommunikationssystem 27 zwischen dem Drahtvorschubgerät 11 und der Steuervorrichtung 4 aufbauen zu können, sind diese beiden Komponenten mit jeweils einem Kommunikationsmodul 29 ausgestattet. Zweckmäßigerweise sind diese Kommunikationsmodule 29 am höchsten Punkt des Gehäuses 26 bzw. am höchsten Punkt des Drahtvorschubgerätes 11 angeordnet, um eine bessere Übertragungsqualität zu erreichen.

Des weiteren ist auch die Kupplungsvorrichtung 31 des Schlauchpaketes 23, welches zweiteilig aufgebaut ist, mit einem Kommunikationsmodul 29 ausgestattet. Um nun eine größere Distanz zwischen dem Kommunikationsmodul 29 der Kupplungsvorrichtung 31 und dem Kommunikationsmodul 29 der Steuervorrichtung 4 überbrücken zu können, wozu die Sendeleistung der einzelnen Sende- und/oder Empfangsvorrichtungen 38 der Kommunikationsmodule 29 nicht ausreichen würde, ist es möglich, Sende- und/oder Empfangseinheiten 45 beispielsweise eines drahtlosen Telefonnetzes 46 einer Telefonanlage 47 für die Signal- und/oder Datenübertragung zwischen den Komponenten des Schweißgerätes 1 heranzuziehen.

D.h. also, daß in diesem Fall das drahtlose Daten- bzw. Kommunikationsnetz 37 zumindest teilweise über das drahtlose Telefonnetz 46 geführt wird. Selbstverständlich müssen die Sende- und/oder Empfangsvorrichtungen 38 in diesem Fall mit den Sende- und/oder Empfangseinheiten 45 kommunizieren können, d.h., daß die Frequenzen der Sender und/oder Empfänger aufeinander abgestimmt sein müssen und auch die Sende- und/oder Empfangsvorrichtungen 38 und die Sende- und/oder Empfangseinheiten 45 zum Senden und/oder Empfangen derselben Datenblöcke, insbesondere mit nach demselben Algorithmus vergebener Kennung und/oder zur Verarbeitung derselben fortlaufenden Auftragsnummem, ausgebildet sein müssen.

Das drahtlose Telefonnetz 46 bzw. die Sende- und/oder Empfangseinheiten 45 können beispielsweise durch eine handelsübliche "DECT-Anlage" realisiert sein. Zur Energieversorgung der Telefonanlage 47 und der Sende- und/oder Empfangseinheiten 45 ist es zweckmäßig, diese mit einer Energiequelle - wie in strichlierten Linien dargestellt - zu verbinden.

Zum Aufbau des drahtlosen Daten- bzw. Kommunikationsnetzes 37 ist es auch möglich, Sende- und/oder Empfangseinheiten 45 zu verwenden, welche eigens für die Signal- und/oder Datenübertragung für Schweiß- oder artverwandte Prozesse ausgebildet sind, und nicht, wie zuvor beschrieben, Sende- und/oder Empfangseinheiten 45, welche der Telefonanlage 47 zugeordnet sind. Beispielsweise können also, vorzugsweise an mehreren Stellen bzw. matrixartig in einem Raum, beispielsweise einer Montagehalle, angeordnete Sende- und/oder Empfangseinheiten 45 zur Signal- und/oder Datenübertragung für einen Schweißprozeß herangezogen werden. Der Aufbau der Kommunikationsmodule 29 kann also auch für Sende- und/oder Empfangseinheiten 45 herangezogen werden. Man kann von Kommunikationsmodulen 29 sprechen, welche in keiner Komponente des Systems, insbesondere der Schweißanlage, angeordnet sind.

Mit dem in der Fig. 3 dargestellten Aufbau des modularen Kommunikationssystemes 27 ist es nun möglich, eine Signal- und/oder Datenübertragung zwischen dem Schweißbrenner des Schweißgerätes 1 und dem externen Drahtvorschubgerät 11 durchzuführen. Dadurch können Steuersignale vom Schweißbrenner 10, wie beispielsweise das Betätigen einer Prozeßsteuertaste, an das Drahtvorschubgerät 11 weitergeleitet werden, worauf dieses eine entsprechende Steuerung und/oder Regelung, beispielsweise einer Drahtvorschubgeschwindigkeit, durchführen kann. Selbstverständlich ist die dargestellte Ausgestaltung nur eine von vielen möglichen Varianten. Stellvertretend sei für eine Vielzahl von Verwendungsmöglichkeiten eine Signalund/oder Datenübertragung zwischen dem Schweißbrenner 10, insbesondere dessen Prozeßsteuertaste, und der Steuervorrichtung 4 oder der Ein- und/oder Ausgabevorrichtung 22 erwähnt. Beispielsweise ist es auch möglich, die Gaszufuhr zum Schweißbrenner 10 durch ein über das Daten- bzw. Kommunikationsnetz 37 übermitteltes Signal zu steuern bzw. zu regeln.

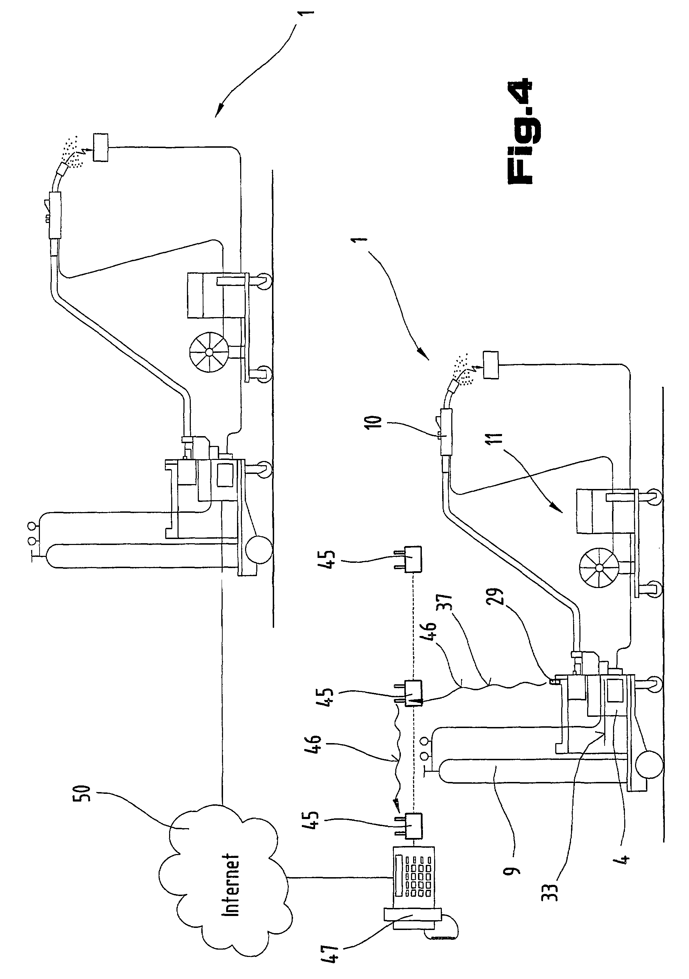

In der Fig. 4 sind zwei Schweißgeräte 1 gezeigt, wobei ein Schweißgerät 1 mit dem Kommunikationsmodul 29, welches über den Feldbus 33 beispielsweise mit der Steuervorrichtung 4 in Verbindung steht, ausgestattet ist und das Kommunikationsmodul 29 über das drahtlose Daten- bzw. Kommunikationsnetz 37 bzw. das drahtlose Telefonnetz 46 mittels der Sendeund/oder Empfangseinheiten 45 mit der Telefonanlage 47 in Verbindung treten kann. Die Telefonanlage 47 kann ihrerseits eine Verbindung zu einem Intranet bzw. Internet 50 herstellen. Das Internet 50 ist mit dem weiteren Schweißgerät 1 verbunden, wodurch ein Datenaustausch der beiden Schweißgeräte 1 über das Internet 50, das drahtlose Telefonnetz 46 und das drahtlose Daten- bzw. Kommunikationsnetz 37 durchgeführt werden kann.

Ein Anschluß des weiteren Schweißgerätes 1 an das Internet 50 kann über weitere Sendeund/oder Empfangseinheiten 45 einer weiteren Telefonanlage 47 und/oder weitere Sendeund/oder Empfangsvorrichtungen 38 von weiteren Kommunikationsmodulen 29 hergestellt werden, es ist aber ebenfalls möglich, diesen Anschluß über eine Leitungsverbindung, beispielsweise ein Telefonkabel, herzustellen.

Auf diese Weise ist es möglich, mehrere Systeme, beispielsweise mehrere Schweißanlagen bzw. Schweißgeräte, welche baulich unabhängig voneinander ausgebildet sind und örtlich voneinander getrennt aufgebaut sind, zu verbinden, um einen Signal- und/oder Datenaustausch durchführen zu können.

Der Ordnung halber sei abschließend darauf hingewiesen, daß zum besseren Verständnis des Schweißgerätes 1 dieses bzw. dessen Bestandteile teilweise unmaßstäblich und/oder vergrößert und/oder verkleinert dargestellt wurden.

### Bezugszeichenaufstellung

- 1: Schweißgerät
- 2: Stromquelle
- 3: Leistungsteil
- 4: Steuervorrichtung
- 5: Umschaltglied

- 6: Steuerventil
- 7: Versorgungsleitung
- 8: Gas
- 9: Gasspeicher
- 10: Schweißbrenner

- 11: Drahtvorschubgerät
- 12: Versorgungsleitung
- 13: Schweißdraht
- 14: Vorratstrommel
- 15: Lichtbogen

- 16: Werkstück
- 17: Versorgungsleitung
- 18: Versorgungsleitung
- 19: Kühlkreislauf
- 20: Strömungswächter

- 21: Wasserbehälter
- 22: Ein- und/oder Ausgabevorrichtung
- 23: Schlauchpaket
- 24: Verbindungseinrichtung
- 25: Zugentlastungsvorrichtung

- 26: Gehäuse
- 27: (modulares) Kommunikationssystem
- 28: Aufnahmevorrichtung
- 29: Kommunikationsmodul
- 30: Schweißschirm

- 31: Kupplungsvorrichtung
- 32: Datenübertragungssystem
- 33: Feldbus
- 34: Teilstück
- 35: Teilstück

- 36: Verbindungsvorrichtung
- 37: (drahtloses) Daten- bzw. Kommunikationsnetz
- 38: Sende- und/oder Empfangsvorrichtung
- 39: ---
- 40: ---

- 41: ---
- 42: Vorrichtung
- 43: Speichereinheit
- 44: Anzeigevorrichtung
- 45: Sende- und/oder Empfangseinheit

- 46: (drahtloses) Telefonnetz
- 47: Telefonanlage
- 48: ---
- 49: ---
- 50: Internet

## Patentansprüche

1. Schweißsystem mit zumindest einer Komponente, die über mindestens eine Sende und/oder Empfangsvorrichtung drahtlos mit zumindest einer Sende- und/oder Empfangsvorrichtung einer weiteren Komponente des Systems kommuniziert, **dadurch gekennzeichnet, daß** in unterschiedlichsten Komponenten des Schweißsystems diese zumindest eine Komponente des Systems so ausgebildet ist, dass ihre Sende- und Empfangsvorrichtung (38) zur drahtlosen Datenübertragung in einem Kommunikationsmodul (29) enthalten ist, das eine Aufnahmevorrichtung (28) dieser Komponente ausstattet, wobei zumindest eine Verbindungsvorrichtung (36) der Aufnahmevorrichtung (28) mit einem internen Datenübertragungssystem (32) des Systems, insbesondere der Schweißanlage, verbunden ist und die Aufnahmevorrichtung (28) zum Einsetzten und/oder Austauschen der Kommunikationsmodule (29) ausgebildet ist.

2. Schweißsystem nach Anspruch 1, **dadurch gekennzeichnet, daß** die Komponente bzw. die Komponenten durch einen Schweißbrenner (10) und/oder ein Schlauchpaket (23) und/ oder eine Steuervorrichtung (4) und/oder eine Stromquelle (2) und/oder ein Drahtvorschubgerät (11) und/oder einen Schweißschirm (30) und/oder eine Ein- und/oder Ausgabevorrichtung (22) und/oder dgl. gebildet ist bzw. sind.

3. Schweißsystem nach Anspruch 1 oder 2, **dadurch gekennzeichnet, daß** zumindest eine der Aufnahmevorrichtungen (28) mit einem Teilstück (34) einer Verbindungsvorrichtung (36) zum Anschluß an ein internes Datenübertragungssystem (32) und/oder an eine Energiequelle des Systems, insbesondere der Schweißanlage, oder der jeweiligen Komponente ausgebildet ist.

4. Schweißsystem nach einem oder mehreren der vorhergehenden Ansprüche, **dadurch gekennzeichnet, daß** die Aufnahmevorrichtungen (28) zum werkzeuglosen Austauschen der Kommunikationsmodule (29) ausgebildet sind.

5. Schweißsystem nach einem oder mehreren der vorhergehenden Ansprüche, **dadurch gekennzeichnet, daß** die Aufnahmevorrichtungen (28) durch Steckaufnahmen, gegebenenfalls mit Rastverbindungen, gebildet sind.

6. Schweißsystem nach einem oder mehreren der vorhergehenden Ansprüche, **dadurch gekennzeichnet, daß** die Verbindungsvorrichtung (36), insbesondere Teilstücke (34, 35), drahtlos durch eine Induktionsschleife und/oder eine Infrarotschnittstelle ausgebildet ist.

7. Schweißsystem nach einem oder mehreren der vorhergehenden Ansprüche, **dadurch gekennzeichnet, daß** die Verbindungsvorrichtung (36), insbesondere die Teilstücke (34, 35), durch eine Steckverbindung, insbesondere eine beim Einsetzen des Kommunikationsmoduls (29) in die Aufnahmevorrichtung (28) automatisch kontaktierende Steckverbindung, ausgebildet ist.

8. Schweißsystem nach einem oder mehreren der vorhergehenden Ansprüche, **dadurch gekennzeichnet, daß** die Verbindungsvorrichtung (36), insbesondere ein Teilstück (34) der Verbindungsvorrichtung (36), elektrisch und/oder optisch mit dem internen Datenübertragungssystem (32) des Systems, insbesondere der Schweißanlage, verbunden ist.

9. Schweißsystem nach einem oder mehreren der vorhergehenden Ansprüche, **dadurch gekennzeichnet, daß** zumindest eines der Kommunikationsmodule (29) mit einem Teilstück (35) der Verbindungsvorrichtung (36) ausgebildet ist.

10. Schweißsystem nach einem oder mehreren der vorhergehenden Ansprüche, **dadurch gekennzeichnet, daß** das interne Datenübertragungssystem (32) durch ein Bussystem, insbesondere einen Feldbus (33), gebildet ist.

11. Schweißsystem nach einem oder mehreren der vorhergehenden Ansprüche, **dadurch gekennzeichnet, daß** die Sende- und/oder Empfangsvorrichtung (38) des Kommunikationsmoduls (29) mit einer Sendeleistung, welche unterhalb einer genehmigungspflichtigen Sendeleistung liegt, ausgebildet ist.

12. Schweißsystem nach einem oder mehreren der vorhergehenden Ansprüche, **dadurch gekennzeichnet, daß** die Sende- und/oder Empfangsvorrichtung (38) des Kommunikationsmoduls (29) mit einer Sende- und/oder Empfangsleistung für eine Reichweite von max. 100 m im Umkreis, bevorzugt zwischen 3 m und 20 m, ausgebildet ist.

13. Schweißsystem nach einem oder mehreren der vorhergehenden Ansprüche, **dadurch gekennzeichnet, daß** die Sende- und/oder Empfangsvorrichtung (38) des Kommunikationsmoduls (29) zur Kommunikation über genehmigungsfreie Frequenzen ausgebildet ist.

14. Schweißsystem nach einem oder mehreren der vorhergehenden Ansprüche, **dadurch gekennzeichnet, daß** die Sende- und/oder Empfangsvorrichtung (38) des Kommunikationsmoduls (29) zum Aufbau einer drahtlosen Verbindung zu einem drahtlosen Telefonnetz (46), insbesondere zu einem hausinternen Telefonnetz (46), ausgebildet ist.

15. Schweißsystem nach einem oder mehreren der vorhergehenden Ansprüche, **dadurch gekennzeichnet, daß** das drahtlose Telefonnetz (46) zum Aufbau einer Verbindung zu einem überregionalen Datennetz, insbesondere zu einem Intranet und/oder zum Internet (50), ausgebildet ist.

16. Schweißsystem nach einem oder mehreren der vorhergehenden Ansprüche, **dadurch gekennzeichnet, daß** die Energiequelle, mit welcher das Kommunikationsmodul (29) in Verbindung steht, durch eine in der jeweiligen Komponente angeordnete Energiequelle, insbesondere eine Gleichspannungsquelle, gebildet ist.

17. Schweißsystem nach einem oder mehreren der vorhergehenden Ansprüche, **dadurch gekennzeichnet, daß** zumindest eines der Kommunikationsmodule (29) mit einem internen Energiespeicher, insbesondere einer Batterie oder einem Akkumulator, ausgebildet ist.

18. Schweißsystem nach einem oder mehreren der vorhergehenden Ansprüche, **dadurch gekennzeichnet, daß** zumindest eines der Kommunikationsmodule (29) mit einer Vorrichtung (42), welche zur Anpassung unterschiedlicher Datenformate zwischen dem internen Datenübertragungssystem (32) und dem drahtlosen Daten- bzw. Kommunikationsnetz (37) dient, ausgebildet ist.

19. Schweißsystem nach Anspruch 19, **dadurch gekennzeichnet, daß** die Vorrichtung (42) zwischen dem Teilstück (35) der Verbindungsvorrichtung (36) und der Sende- und/oder Empfangsvorrichtung (38) angeordnet ist.

20. Schweißsystem nach einem oder mehreren der vorhergehenden Ansprüche, **dadurch gekennzeichnet, daß** zumindest eines der Kommunikationsmodule (29) mit einer Speichereinheit (43), insbesondere zur Zwischenspeicherung von zu übertragenden Daten, ausgebildet ist.

21. Verfahren zum Schweißen oder zur Durchführung artverwandter Prozesse, bei dem Signale und/oder Daten von zumindest einer Komponente eines Schweißsystems, insbesondere eine Komponente eines Schweißgerätes bzw. einer Schweißanlage, zu zumindest einer weiteren Komponente des Schweißsystems drahtlos über Sende- und/oder Empfangsvorrichtungen und/oder Sende- und/oder Empfangseinheiten, übermittelt werden, **dadurch gekennzeichnet, daß** zumindest eine beliebige Komponente des Schweißsystems mit einer Aufnahmevorrichtung (28) für ein Kommunikationsmodul (29) versehen wird, und eine Aufnahmevorrichtung (28) über eine Verbindungsvorrichtung (36) mit einem internen Datenübertragungssystem (32) und/oder einer Energiequelle des Schweißsystems, insbesondere der Schweißanlage, verbunden wird und zumindest ein Kommunikationsmodul (29) in eine Aufnahmevorrichtung (28) eingesetzt wird und daraufhin eine Signal- und/oder Datenübertragung über eine Sende- und/oder Empfangsvorrichtung (38) des Kommunikationsmoduls (29) zu einer weiteren Sende- und/oder Empfangsvorrichtung (38) eines weiteren Kommunikationsmoduls (29) des Schweißsystems und/oder einer weiteren Komponente eines weiteren Schweißsystems und/oder einer Sende- und/oder Empfangseinheit (45), z.B. einer Telefonanlage (47), über ein drahtloses Daten- bzw. Kommunikationsnetz (37) durchgeführt wird.

22. Verfahren nach Anspruch 21, **dadurch gekennzeichnet, daß** die Signal- und/oder Datenübertragung zwischen Komponenten innerhalb eines Schweißsystems oder zwischen Komponenten unterschiedlicher Schweißsysteme, welche insbesondere baulich unabhängig und/oder örtlich getrennt sind, durchgeführt wird.

23. Verfahren nach Anspruch 21 oder 22, **dadurch gekennzeichnet, daß** eine Sendeleistung der Kommunikationsmodule (29) unterhalb einer genehmigungspflichtigen Sendeleistung gewählt wird.

24. Verfahren nach Anspruch 21 bis 23, **dadurch gekennzeichnet, daß** eine Reichweite der Kommunikationsmodule (29) von max. 100 m im Umkreis, bevorzugt zwischen 3 m und 20 m, gewählt wird.

25. Verfahren nach Anspruch 21 bis 24, **dadurch gekennzeichnet, daß** eine Kommunikation im drahtlosen Daten- bzw. Kommunikationsnetz (37) über eine genehmigungsfreie Frequenz erfolgt.

26. Verfahren nach Anspruch 21 bis 25, **dadurch gekennzeichnet, daß** zur Kommunikation im drahtlosen Daten- bzw. Kommunikationsnetz (37) zumindest bereichsweise ein drahtloses Telefonnetz (46), insbesondere ein Funktelefonnetz, beispielsweise ein hausintemes Telefonnetz (46), herangezogen wird.

27. Verfahren nach Anspruch 21 bis 26, **dadurch gekennzeichnet, daß** die Kommunikation oder eine Kommunikationsweiterleitung im drahtlosen Daten- bzw. Kommunikationsnetz (37) über mehrere Sende- und/oder Empfangsvorrichtungen (38) mehrerer Kommunikationsmodule (29) und gegebenenfalls über ein oder mehrere Sende- und/oder Empfangseinheiten (45), z.B. eines drahtlosen Telefonnetzes (46), durchgeführt wird.

28. Verfahren nach Anspruch 21 bis 27, **dadurch gekennzeichnet, daß** die Aufnahme von Daten aus einem internen Datenübertragungssystem (32) bzw. die Weiterleitung von Daten in das interne Datenübertragungssystem (32) einer Komponente durch das Kommunikationsmodul (29) kontaktlos, insbesondere über Infrarotstrahlung oder einer Induktionsschleife, durchgeführt wird.

29. Verfahren nach Anspruch 21 bis 28, **dadurch gekennzeichnet, daß** von einer Vorrichtung (42) eine Anpassung unterschiedlicher Datenformate der vom internen Datenübertragungssystem (32) aufgenommenen bzw. an dieses weiterzuleitenden Daten durchgeführt wird.

30. Verfahren nach Anspruch 21 bis 29, **dadurch gekennzeichnet, daß** eine Versorgung des Kommunikationsmodules (32) mit Energie drahtlos und ortsunabhängig durch einen integrierten Energiespeicher, insbesondere eine Batterie bzw. einen Akkumulator, durchgerührt wird.

31. Verfahren nach Anspruch 21 bis 30, **dadurch gekennzeichnet, daß** die Signal- und/oder Datenübertragung über eine beliebige Anzahl von Kommunikationsmodulen (29), die in keiner Komponente des Schweißsystems, insbesondere der Schweißanlage, angeordnet werden, durchgeführt wird.

32. Verfahren nach Anspruch 21 bis 31, **dadurch gekennzeichnet, daß** die Komponente des Schweißsystems, insbesondere der Schweißanlage, mittels der übertragenen Signale und/oder Daten geregelt bzw. gesteuert wird.

33. Verfahren nach Anspruch 21 bis 32, **dadurch gekennzeichnet, daß** mittels der Kommunikationsmodule (29) Daten aus dem internen Datenübertragungssystem (32), insbesondere dem Bussystem, drahtlos über das Daten- bzw. Kommunikationsnetz (37) oder Daten aus dem Daten- bzw. Kommunikationsnetz (37) an das interne Datenübertragungssystem (32) weitergeleitet werden.

## Claims

1. Welding system having at least one component which communicates wirelessly by means of at least one transmitter and/or receiver system with at least one transmitter and/or receiver system of another component of the system, **characterised in that**, in various different components of the system, in particular the welding system, this at least one component of the welding system is configured in such a way that, to effect a wireless data transmission, its transmitter and/or receiver system (38) is contained in a communication module (29) and this component is equipped with at least one mounting unit (28), whereby at least one connecting mechanism (36) of the mounting unit (28) is connected to an internal data transmission system (32) of the system, in particular the welding system, and the mounting unit (28) is designed to enable the communication module (29) to be inserted in it and/or changed.

2. Welding system as claimed in claim 1, **characterised in that** the component or components is or are a welding torch (10) and/or a hose pack (23) and/or a control system (4) and/or a power source (2) and/or a wire feed device (11) and/or a welding mask (30) and/or an input and/or output device (22) and/or such like.

3. Welding system as claimed in claim 1 or 2, **characterised in that** at least one of the mounting units (28) has a part-element (34) of a connecting mechanism (36) for connecting to an internal data transmission system (32) and/or a power source of the system, in particular the welding system, or the respective component.

4. Welding system as claimed in one or more of the preceding claims, **characterised in that** the mounting units (28) are designed so that the communication modules (29) can be changed without the need for tools.

5. Welding system as claimed in one or more of the preceding claims, **characterised in that** the mounting units (28) are provided with plug-in systems and optionally with latch connections.

6. Welding system as claimed in one or more of the preceding claims, **characterised in that** the connecting mechanism (36), in particular part-elements (34, 35), are provided in a wireless arrangement by means of an induction loop and/or an infrared interface.

7. Welding system as claimed in one or more of the preceding claims, **characterised in that** the connecting mechanism (36), in particular the part-elements (34, 35) are provided in the form of a plug and socket connection, in particular a plug and socket mechanism which automatically establishes a contact when the communication module (29) is placed in the mounting unit (28).

8. Welding system as claimed in one or more of the preceding claims, **characterised in that** the connecting mechanism (36), in particular a part-element (34) of the connecting mechanism (36), is electrically and/or optically connected to the internal data transmission system (32) of the system, in particular the welding system.

9. Welding system as claimed in one or more of the preceding claims, **characterised in that** at least one of the communication modules (29) is provided with a part-element (35) of the connecting mechanism (36).

10. Welding system as claimed in one or more of the preceding claims, **characterised in that** the internal data transmission system (32) is provided in the form of a bus system, in particular a field bus (33).

11. Welding system as claimed in one or more of the preceding claims, **characterised in that** the transmitter and/or receiver system (38) of the communication module (29) has a transmission power which is below a transmission power requiring a licence.

12. Welding system as claimed in one or more of the preceding claims, **characterised in that** the transmitter and/or receiver system (38) of the communication module (29) has a transmission and/or reception capacity for a range of at most a radius of 100 m, preferably between 3 m and 20 m.

13. Welding system as claimed in one or more of the preceding claims, **characterised in that** the transmitter and/or receiver system (38) of the communication module (29) is specified for communication at frequencies which do not require a licence.

14. Welding system as claimed in one or more of the preceding claims, **characterised in that** the transmitter and/or receiver system (38) of the communication module (29) is configured for establishing a wireless connection to a wireless telephone network (46), in particular to an in-house telephone network (46).

15. Welding system as claimed in one or more of the preceding claims, **characterised in that** the wireless telephone network (46) is configured for establishing a connection to a trans-regional data network, in particular to an intranet and/or the Internet (50).

16. Welding system as claimed in one or more of the preceding claims, **characterised in that** the power source to which the communication module (29) is connected is a power source disposed in the respective component, in particular a direct voltage source.

17. Welding system as claimed in one or more of the preceding claims, **characterised in that** at least one of the communication modules (29) has an internal energy storage system, in particular a battery or an accumulator.

18. Welding system as claimed in one or more of the preceding claims, **characterised in that** at least one of the communication modules (29) is provided with a device (42) which adapts different data formats between the internal data transmission system (32) and the wireless data communication network (37).

19. Welding system as claimed in claim 19, **characterised in that** the device (42) is disposed between the part-element (35) of the connecting mechanism (36) and the transmitter and/or receiver system (38).

20. Welding system as claimed in one or more of the preceding claims, **characterised in that** at least one of the communication modules (29) is provided with a memory unit (43), in particular for temporarily storing data awaiting transmission.

21. Method of welding or running a related process, whereby signals and/or data are wirelessly transmitted from at least one component of a welding system, in particular a component of a welding device or a welding unit, to at least one other component of the welding system by means of transmitter and/or receiver systems and/or transmitter and/or receiver units, **characterised in that** at least any one of the components of the welding system can be provided with a mounting unit (28) for a communication module (29) and a mounting unit (28) is connected by means of a connecting mechanism (36) to an internal data transmission system (32) and/or a power source of the welding system, in particular the welding unit, and at least one communication module (29) is inserted in a mounting unit (28), after which a signal and/or data transmission is run via a transmitter and/or receiver system (38) of the communication module (29) to another transmitter and/or receiver system (38) of another communication module (29) of the welding system and/or another component of another welding system and/or a transmitter and/or receiver unit (45), e.g. a telephone system (47), via a wireless data and communication network (37).

22. Method as claimed in claim 21, **characterised in that** the signal and/or data transmission is run between components within a welding system or between components of different welding systems which are structurally independent of one another or disposed in separate locations, in particular.

23. Method as claimed in claim 21 or 22, **characterised in that** a transmission power of the communication module (29) is selected so as to be below a transmission power requiring a licence.

24. Method as claimed in claim 21 to 23, **characterised in that** a range of the communication module (29) is selected so as to be at most a radius of 100 m, preferably between 3m and 20 m.

25. Method as claimed in claim 21 to 24, **characterised in that** communication in the wireless data and communication network (37) is effected at a frequency that does not require a licence.

26. Method as claimed in claim 21 to 25, **characterised in that** a wireless telephone network (46), in particular a mobile telephone network, for example an in-house telephone network (46), is used in at least certain areas for communicating in the wireless data and communication network (37).

27. Method as claimed in claim 21 to 26, **characterised in that** the communication is effected or a communication forwarded in the wireless data and communication network (37) by means of several transmitter and/or receiver system (38) of several communication modules (29) and optionally via one or more transmitter and/or receiver units (45), e.g. of a wireless telephone network (46).

28. Method as claimed in claim 21 to 27, **characterised in that** data is picked up from an internal data transmission system (32) and data is forwarded to the internal data transmission system (32) of a component contactlessly by the communication module (29), in particular by means of infrared radiation or an induction loop.

29. Method as claimed in claim 21 to 28, **characterised in that** different data formats received from the internal data transmission system (32) and data to be forwarded to it are adapted by means of a device (42).

30. Method as claimed in claim 21 to 29, **characterised in that** the communication module (32) is wirelessly supplied with power and regardless of location by means of an integrated energy storage system, in particular a battery or an accumulator.

31. Method as claimed in claim 21 to 30, **characterised in that** the signal and/or data transmission is run by means of any number of communication modules (29), which are not disposed in any component of the welding system, in particular the welding unit.

32. Method as claimed in claim 21 to 31, **characterised in that** the component of the welding system, in particular the welding unit, is regulated and controlled by means of the transmitted signals and/or data.

33. Method as claimed in claim 21 to 32, **characterised in that** data is picked up from the internal data transmission system (32), in particular the bus system, wirelessly via the data and communication network (37) or data is forwarded from the data and communication network (37) to the internal data transmission system (32) by means of the communication modules (29).

## Revendications

1. Système de soudage avec au moins un composant qui communique par au moins un dispositif d'émission et/ou de réception sans fil avec au moins un dispositif d'émission et/ou de réception d'un autre composant du système, **caractérisé en ce que** dans des composants les plus divers du système de soudage, cette composante du système est réalisée de façon que son dispositif d'émission et de réception (38) pour la transmission sans fil des données se trouve dans un module de communication (29) qui équipe un dispositif de réception (28) de ce composant, où au moins un dispositif de liaison (36) du dispositif de réception (28) est relié à un système de transmission de données interne (32) du système, en particulier de l'installation de soudage, et le dispositif de réception (28) est réalisé pour la mise en place et/ou l'échange des modules de communication (29).

2. Système de soudage selon la revendication 1, **caractérisé en ce que** le respectivement les composants sont formés par un chalumeau à souder (10) et/ou un paquet de tuyaux (23) et/ou un dispositif de commande (4) et/ou une source de courant (2) et/ou un appareil de poussée de fil (11) et/ou un écran de protection de soudeur (30) et/ou un dispositif d'entrée et/ou d'émission (22) et/ou analogue.

3. Système de soudage selon la revendication 1 ou 2, **caractérisé en ce qu'**au moins l'un des dispositifs de réception (28) est réalisé avec une pièce partielle (34) d'un dispositif de liaison (36) pour la connexion à un système de transmission de données interne (32) et/ou à une source d'énergie du système, en particulier de l'installation de soudage ou du composant respectif.

4. Système de soudage selon l'une ou plusieurs des revendications précédentes, **caractérisé en ce que** les dispositifs de réception (28) sont réalisés pour échanger sans outil les modules de communication (29).

5. Système de soudage selon l'une ou plusieurs des revendications précédentes, **caractérisé en ce que** les dispositifs de réception (28) sont formés par des logements de prise, le cas échéant avec des liaisons encliquetables.

6. Système de soudage selon l'une ou plusieurs des revendications précédentes, **caractérisé en ce que** le dispositif de liaison (36), en particulier des pièces partielles (34, 35) est réalisé sans fil par une boucle d'induction et/ou une interface infrarouge.

7. Système de soudage selon l'une ou plusieurs des revendications précédentes, **caractérisé en ce que** le dispositif de liaison (36), en particulier les pièces partielles (34, 35), est réalisé par un système de couplage, en particulier un connecteur contactant automatiquement lors de l'insertion du module de communication (29) dans le dispositif de réception (28).

8. Système de soudage selon l'une ou plusieurs des revendications précédentes, **caractérisé en ce que** le dispositif de liaison (36), en particulier une pièce partielle (34) du dispositif de liaison (36) est relié électriquement et/ou optiquement au système de transmission de données interne (32) du système, en particulier de l'installation de soudage.

9. Système de soudage selon l'une ou plusieurs des revendications précédentes, **caractérisé en ce qu'**au moins l'un des modules de communication (29) est réalisé avec une pièce partielle (35) du dispositif de liaison (36).

10. Système de soudage selon l'une ou plusieurs des revendications précédentes, **caractérisé en ce que** le système de transmission de données interne (32) est réalisé par un système à bus, en particulier un bus de champ (33).

11. Système de soudage selon l'une ou plusieurs des revendications précédentes, **caractérisé en ce que** le dispositif d'émission et/ou de réception (38) du module de communication (29) est réalisé avec une puissance d'émission qui se situe en dessous d'une puissance d'émission soumise à une autorisation.

12. Système de soudage selon l'une ou plusieurs des revendications précédentes, **caractérisé en ce que** le dispositif d'émission et/ou de réception (38) du module de communication (29) est réalisé avec une puissance d'émission et/ou de réception pour une portée de 100 m au maximum dans un rayon, de préférence entre 3 m et 20 m.

13. Système de soudage selon l'une ou plusieurs des revendications précédentes, **caractérisé en ce que** le dispositif d'émission et/ou de réception (38) du module de communication (29) est réalisé pour la communication par des fréquences non soumises à une autorisation.

14. Système de soudage selon l'une ou plusieurs des revendications précédentes, **caractérisé en ce que** le dispositif d'émission et/ou de réception (38) du module de communication (29) est réalisé pour l'établissement d'une liaison sans fil à un réseau téléphonique sans fil (46), en particulier à un réseau téléphonique interne (46).

15. Système de soudage selon l'une ou plusieurs des revendications précédentes, **caractérisé en ce que** le réseau téléphonique sans fil (46) est réalisé pour l'établissement d'une connexion à un réseau de données allant au-delà de la région, en particulier à un Intranet et/ou à l'Internet (50).

16. Système de soudage selon l'une ou plusieurs des revendications précédentes, **caractérisé en ce que** la source d'énergie avec laquelle le module de communication (29) est en liaison, est formée par une source d'énergie, en particulier une source de tension continue, disposée dans le composant respectif.

17. Système de soudage selon l'une ou plusieurs des revendications précédentes, **caractérisé en ce qu'**au moins un des modules de communication (29) est réalisé avec un accumulateur d'énergie interne, en particulier une batterie ou un accumulateur.

18. Système de soudage selon l'une ou plusieurs des revendications précédentes, **caractérisé en ce qu'**au moins un des modules de communication (29) est réalisé avec un dispositif (42) qui sert à adapter des formats de données différents entre le système de transmission de données interne (32) et le réseau de données respectivement de communication sans fil (37).

19. Système de soudage selon la revendication 19, **caractérisé en ce que** le dispositif (42) est disposé entre la pièce partielle (35) du dispositif de liaison (36) et le dispositif d'émission et/ou de réception (38).

20. Système de soudage selon l'une ou plusieurs des revendications précédentes, **caractérisé en ce qu'**au moins un des modules de communication (29) est réalisé avec une unité de stockage (43), en particulier pour le stockage intermédiaire de données à transmettre.

21. Procédé de soudage ou pour l'exécution de processus apparentés, où des signaux et/ou données d'au moins un composant d'un système de soudage, en particulier un composant d'un appareil de soudage respectivement d'une installation de soudage, sont transmis à au moins un autre composant du système de soudage sans fil par des dispositifs d'émission et/ou de réception et/ou des unités d'émission et/ou de réception, **caractérisé en ce qu'**au moins un composant sélectif du système de soudage est pourvu d'un dispositif de réception (28) d'un module de communication (29), et un dispositif de réception (28) est relié par un dispositif de liaison (36) à un système de transmission de données interne (32) et/ou une source d'énergie du système de soudage, en particulier de l'installation de soudage, et au moins un module de communication (29) est inséré dans un dispositif de réception (28), et ensuite une transmission de signaux et/ou de données est effectuée par un dispositif d'émission et/ou de réception (38) du module de communication (29) vers un autre dispositif d'émission et/ou de réception (38) d'un autre module de communication (29) du système de soudage et/ou d'un autre composant d'un autre système de soudage et/ou d'une unité d'émission et/ou de réception (45), par exemple d'une installation téléphonique (47), par un réseau de données respectivement de communication (37) sans fil.

22. Procédé selon la revendication 21, **caractérisé en ce que** la transmission de signaux et/ou données est effectuée entre des composants à l'intérieur d'un système de soudage ou entre des composants de systèmes de soudage différents, qui sont en particulier indépendants de par la construction et/ou sont séparés localement.

23. Procédé selon la revendication 21 ou 22, **caractérisé en ce qu'**une puissance d'émission des modules de communication (29) est sélectionnée pour qu'elle soit en dessous d'une puissance d'émission nécessitant une autorisation.

24. Procédé selon la revendication 21 à 23, **caractérisé en ce qu'**une portée des modules de communication (29) est sélectionnée dans un rayon de 100 m au maximum, de préférence entre 3 m et 20 m.

25. Procédé selon les revendications 21 à 24, **caractérisé en ce qu'**une communication dans le réseau de données respectivement communication sans fil (37) a lieu par une fréquence ne nécessitant pas d'autorisation.

26. Procédé selon les revendications 21 à 25, **caractérisé en ce que** pour la communication dans le réseau de données respectivement de communication sans fil (37), on utilise au moins par zones un réseau téléphonique sans fil (46), en particulier un réseau radiotéléphonique, par exemple un réseau téléphonique interne (46).

27. Procédé selon les revendications 21 à 26, **caractérisé en ce que** la communication ou bien une transmission de communication dans le réseau de données respectivement communications sans fil (37) est effectuée sur plusieurs dispositifs d'émission et/ou de réception (38) de plusieurs modules de communication (29) et le cas échéant par une ou plusieurs unités d'émission et/ou de réception (45), par exemple d'un réseau téléphonique (46) sans fil.

28. Procédé selon la revendication 21 à 27, **caractérisé en ce que** la réception de données d'un système de transmission de données interne (32) respectivement la transmission de données dans le système de transmission de données interne (32) d'un composant est effectuée par le module de communication (29) sans contact, en particulier par rayonnement infrarouge ou par une boucle d'induction.

29. Procédé selon la revendication 21 à 28, **caractérisé en ce qu'**un dispositif (42) procède à une adaptation de formats de données différents des données reçues par le système de transmission de données interne (32) respectivement à transmettre à celui-ci.

30. Procédé selon la revendication 21 à 29, **caractérisé en ce qu'**une alimentation du module de communication (32) en énergie est effectuée sans fil et indépendamment du lieu par un accumulateur d'énergie intégré, en particulier une batterie respectivement un accumulateur.

31. Procédé selon la revendication 21 à 30, **caractérisé en ce que** la transmission de signaux et/ou de données est effectuée par un nombre sélectif de modules de communication (29) qui sont disposés dans un composant du système de soudage, en particulier de l'installation de soudage.

32. Procédé selon la revendication 21 à 31, **caractérisé en ce que** le composant du système de soudage, en particulier de l'installation de soudage, est réglé respectivement commandé au moyen des signaux et/ou données transmis.

33. Procédé selon la revendication 21 à 32, **caractérisé en ce qu'**au moyen des modules de communication (29), des données sont transmises du système de transmission de données interne (32), en particulier du système de bus, sans fil par le réseau de données respectivement de communication (37) ou des données du réseau de données respectivement de communication (37) au système de transmission de données interne (32).
